(19) Europäisches Patentamt
European Patent Office
Office européen des brevets

(11) EP 2 280 437 A1

(12) EUROPEAN PATENT APPLICATION
published in accordance with Art. 153(4) EPC

(43) Date of publication:
02.02.2011 Bulletin 2011/05

(51) Int Cl.:
*H01M 4/36* (2006.01)

(21) Application number: 09734947.6

(22) Date of filing: 19.02.2009

(86) International application number:
PCT/KR2009/000792

(87) International publication number:
WO 2009/131303 (29.10.2009 Gazette 2009/44)

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(30) Priority: 21.04.2008 KR 20080036738

(71) Applicant: Ls Mtron Ltd.
Dongan-gu
Anyang-city
Gyeonggi-do 431-080 (KR)

(72) Inventors:
• HAN, Kyung-Hee
Seongnam-si
Gyeonggi-do 462-120 (KR)

• OH, Jeong-Hun
Anyang-si
Gyeonggi-do 431-726 (KR)
• KIM, Jong-Sung
Seoul 152-839 (KR)
• YOUM, Chul
Suwon-si
Gyeonggi-do 443-371 (KR)
• HAN, Jung-Min
Gimpo-si
Gyeonggi-do 415-702 (KR)

(74) Representative: Boden, Keith McMurray et al
Fry Heath & Spence LLP
The Gables
Massetts Road
Horley
Surrey RH6 7DQ (GB)

(54) CATHODE ACTIVE MATERIAL FOR A SECONDARY BATTERY, ELECTRODE FOR A SECONDARY BATTERY AND SECONDARY BATTERY COMPRISING THE SAME, AND A PRODUCTION METHOD THEREFOR

(57) A negative active material for a secondary battery, an electrode for a secondary battery including the same, a secondary battery, and a manufacturing method thereof are disclosed. The negative active material for a secondary battery includes a core carbon material whose edge is partially or entirely coated with a carbide layer, wherein a particle size distribution (PSD) broad value ranges from 0.1 to 0.85 and, when the negative active material is pressed at a pressure of 2 tons, a pore volume rate before and after the compression is 0.2 or greater. A discharge capacity, efficiency, and capacity retention in a long-term cycle can be improved by optimizing the PSB broad value related to a particle distribution among physical properties of a carbon material-based negative active material for a secondary battery, and a pore volume rate of the negative active material before and after compression.

【DRAWINGS】
【Figure 1】

EP 2 280 437 A1

**Description**

[Technical Field]

The present invention relates to a negative active material for a secondary battery, and more particularly, to a negative active material for a secondary battery made of a core carbon material whose edges are partially or entirely coated by a carbide layer, an electrode for a secondary battery including the same, a secondary battery, and a manufacturing method thereof.

[Background Art]

Recently, as the use of electronic devices, such as a mobile phone, a portable notebook computer, an electric vehicle, and the like, using a battery, is rapidly spreading, demand for a lithium secondary battery which is small and light yet has a relatively high capacity is increasing. In particular, a lithium secondary battery is light and has a high energy density, and it is prominent as a driving power source of a portable device. Thus, research and development for improving the performance of the lithium secondary battery is actively ongoing.

A lithium secondary battery includes a negative electrode and a positive electrode made of an active material allowing for the intercalation and deintercalation of lithium ions and produces electrical energy according to oxidation and reduction when lithium ions are intercalated into or deintercalated from the positive electrode and the negative electrode in a state in which an organic electrolyte or a polymer electrolyte is charged between the negative electrode and the positive electrode.

As the positive active material of the lithium secondary battery, a transition metal compound such as lithium cobalt oxide ($LiCoO_2$), lithium nickel oxide ($LiNiO_2$), lithium manganese oxide ($LiMnO_2$), and the like, is largely used.

As the negative active material, a crystalline carbon material such as natural graphite or artificial graphite generally having a high softening degree, or an amorphous (low crystalline) carbon material having a pseudo-graphite structure or a turbostratic structure obtained by carbonizing a hydrocarbon, polymer, and the like, at a low temperature of 1000°C to 1500°C is used.

The crystalline carbon material has a high true density, thus being advantageous for packing an active material, and has excellent potential smoothness, ultrahigh capacity, and charge and discharge reversibility, but has a problem in that as a battery is used more and more, the charge and discharge efficiency and cycle capacity are degraded. This problem is understood to stem from electrolyte decomposition occurring at an edge portion of a crystalline carbon material as the charge and discharge cycle of the battery increases.

Japanese Laid Open Publication No. 2002-348109 discloses a carbon material-based negative active material coated with a carbide layer, in order to prevent the decomposition of an electrolyte from occurring at an edge portion of the crystalline carbon material. In the carbon material-based negative active material, the carbide layer is formed by coating pitch on the surface of a carbon material and thermally treating the pitch at 1000°C or higher. When the carbide layer is coated on the carbon material, an initial capacity of a secondary battery is slightly reduced but the charge and discharge efficiency and capacity characteristics of a long-term cycle can be improved.

In particular, when the coated layer formed of a covering material is turned into artificial graphite through a heat treatment at a high temperature, a reduction amount of the initial capacity can be reduced and the decomposition of an electrolyte can be effectively restrained. Meanwhile, when an electrode for a secondary battery is manufactured by using the carbon material-based negative active material, in general, the negative active material is coated on a metal collector and then pressed. In this case, however, the negative active materials collide to break the carbide layer, causing a problem in that the edge of the carbon material reacting with the electrolyte is exposed again. Such exposure of the edge of the carbon material degrades the efficiency of the secondary battery and long-term cycle characteristics thereof. Thus, in manufacturing the carbon material-based negative active material, physical property conditions of the negative active material which are able to minimize the influence of the broken carbide layer due to the electrode pressing process must be found.

Thus, the inventors of the present application have devised the present invention under a technical background of seeking a physical property parameter of a negative active material having a correlation with the performance of a secondary battery in manufacturing the secondary battery and proposing physical property conditions of the negative active material capable of preventing a degradation of the performance of a secondary battery caused by a broken carbide layer.

[Disclosure]

[Technical Problem]

An aspect of the present invention provides a carbon material-based negative active material having a physical property parameter value not degrading electrochemical characteristics of a secondary battery when a pressing process to manufacture an electrode of the secondary battery is performed, by newly defining the physical property parameter of the negative active material for the secondary battery and recognizing a correlation between the defined physical property parameter and the electrochemical characteristics of the secondary battery, and a manufacturing method thereof.

Another aspect of the present invention provides an electrode for a secondary battery manufactured by using a carbon material-based negative active material of which a newly defined physical property parameter value is optimized, and a secondary battery having the same.

[Technical Solution]

According to an aspect of the present invention, there is provided a negative active material for a secondary battery including a core carbon material whose edge is partially or entirely coated with a carbide layer, wherein a particle size distribution (PSD) broad value ranges from 0.1 to 0.85 and, when the negative active material is pressed at a pressure of 2 tons, a pore volume rate before and after the compression is 0.2 or greater.

The core carbon material may be high crystalline natural graphite. Preferably, the natural graphite may be spherical natural graphite.

The carbon material may be one selected from the group consisting of natural graphite, artificial graphite, mesocarbon micro-beads, mesophese pitch fine particles, isotropic pitch fine particles, or resin coal, each having an oval shape, a fragment-like shape, a scale-like shape, or a whisker shape, and amorphous (or a low crystalline) carbon fine particles having a pseudo-graphite structure or a turbostratic structure, or a mixture thereof.

The carbide layer may be a low crystalline carbide layer formed by coating pitch, tar stemming from coal-based or petroleum-based heavy oil, or a mixture thereof on the core carbon material, and carbonizing and firing the resultant structure.

According to another aspect of the present invention, there is provided an electrode for a secondary battery including a metal current collector coated with the foregoing negative active material.

According to another aspect of the present invention, there is provided a secondary battery including a negative electrode current collector coated with the foregoing negative active material, a positive electrode current collector coated with a positive active material, a separator interposed between the negative electrode current collector and the positive electrode current collector, and an electrolyte impregnated in the separator.

According to another aspect of the present invention, there is provided a method for manufacturing a negative active material based on a carbon material for a secondary battery, including: (a) mixing a core carbon material whose PSD broad value ranges from 0.1 to 0.85 and pore volume rate before and after compression, when the negative active material is pressed at a pressure of 2 tons, is 0.2 or greater, and a carbon coating material stemming from coal-based or petroleum-based heavy oil to obtain a mixture; and (b) firing the mixture to carbonize the carbon coating material to form a carbide layer on a portion or the entirety of an edge of the core carbon material.

[Description of Drawings]

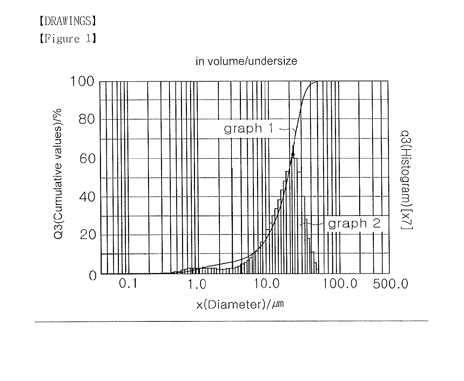

The above and other aspects, features and other advantages of the present invention will before clearly understood from the following detailed description taken in conjunction with the accompanying drawings, in which: FIG. 1 is a particle distribution view of a negative active material for explaining a PSD broad value defined according to an exemplary embodiment of the present invention.

[Best Mode]

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components. The present invention may be embodied in many different forms and may have various embodiments, of which particular ones will be illustrated in drawings and described in detail. However, it should be understood that the following exemplifying description of the invention is not meant to restrict the invention to specific forms of the present invention but rather the present invention is meant to cover all modifications, similarities and alternatives which are included in the spirit and scope of the present invention.

FIG. 1 is a particle distribution diagram of a negative active material for explaining a PSD broad value defined according to an exemplary embodiment of the present invention.

With reference to FIG. 1, in the particle distribution diagram, a horizontal axis represents the diameter of a particle, a left vertical axis Q3 represents the ratio of the volume occupied by particles whose diameter is a particular size or smaller to the volume of the entirety of the particles when the particles are arranged in size order, and a right vertical axis q3 represents the ratio of the volume of a particle having a particular size to the volume of the entirety of the particles. Hereinafter, a graph 1 will be referred to as a volume accumulation curved line, and a graph 2 will be referred to as a volume histogram.

The particle distribution diagram as shown in FIG. 1 is obtained by evenly distributing negative active material powder, whose particle distribution diagram is desired to be obtained, in an organic solvent such as ethanol and then analyzing a particle size distribution state by using CILAS 920 equipment for analyzing a particle size (produced by CILAS (France)). For example, the CILAS 920 equipment calculates a particle size distribution of particles dispersed in the organic solvent by using a laser diffraction method.

The PSD broad value is defined on the PSD graph by Equation 1 shown below:

$$[\text{Equation 1}]$$

$$\text{PSD broad value} = \text{Population\_density}_{max}/(D1 - D_{max})$$

Here, Population_density$_{max}$ indicates the density of particles having a particle diameter (i.e., a particle diameter of a point 'A' in FIG. 1) occupying the most volume of the volume histogram of the PSD. D1 indicates the size of particles corresponding to 1% of the Q3 axis in the volume accumulation graph, and $D_{max}$ indicates the size of particles corresponding to 100% of the Q3 axis in the volume accumulation graph.

Preferably, the negative active material according to an exemplary embodiment of the present invention has a PSD broad value ranging from 0.1 to 0.85.

In an exemplary embodiment of the present invention, besides the foregoing PSD broad value, a pore volume rate is additionally defined. The pore volume rate is the rate of a volume occupied by pores after the negative active material powder is pressed at a pressure of 2 tons to a volume occupied by pores before the negative active material powder is pressed at a pressure of 2 tons. Namely, the pore volume rate is defined as represented by Equation 2 shown below:

$$[\text{Equation 2}]$$

$$\text{Pore volume rate} = \text{pore volume after pressing} / \text{pore volume before pressing}$$

The pressing conditions of the negative active material are such that 2 g of negative active material powder is put in a hole cup having a diameter of 1.4 cm and a force of 2 tons is applied to the upper portion of the hole cup with a press machine. The pore volume rate before and after compression, is measured by using an 'Autosorb-1' instrument (produced by Quantachrome (U.S.)). In detail, a negative active material sample before and after compression is placed in a hermitically closed chamber of the 'Autosorb-1' , an amount of nitrogen gas equal to the amount of the negative active material sample is introduced into the chamber, the difference in a fine pressure in the chamber is sensed to obtain a BHT (Brunauer, Emmett & & Teller) plot, the obtained BET plot being interpreted according to a 'Horvath-Kawazoe method' to thus calculate the pore volume rate before and after compression. For reference, the size of pores which can be measured by using the 'Autosorb-1' instrument ranges from 0.3 nm to 300 nm. The pore volume rate measurement method uses commercialized equipment, which can be easily performed by a person skilled in the art through the specification of the commercialized equipment, so therefore, a detailed description thereof will be omitted.

Preferably, the negative active material according to an exemplary embodiment of the present invention has a pore volume rate of 0.2 or greater.

Preferably, the core carbon material is high crystalline spherical natural graphite. Alternatively, the core carbon material may be one selected from the group consisting of natural graphite, artificial graphite, mesocarbon micro-beads, mesophese pitch fine particles, isotropic pitch fine particles, or resin coal, each having an oval shape, a fragment-like shape, a scale-like shape, or a whisker shape, and amorphous (or a low crystalline) carbon fine particles having a pseudo-graphite structure or a turbostratic structure, or a mixture thereof.

Preferably, the carbide layer is a low crystalline carbide layer formed by coating pitch, tar stemming from coal-based or petroleum-based heavy oil, or a mixture thereof on the core carbon material, and carbonizing and firing the resultant structure. Here, low crystallinity refers to the fact that the carbide layer has a lower degree of crystallinity than that of the core carbon material.

The carbide layer serves to bury pores of the core carbon material to reduce a specific surface area and reduce a decomposition site of an electrolyte. In addition, when the negative active material is pressed in an electrode pressing process, the carbide layer buffers a collision between negative active material particles, to thus prevent the negative active material particles from being transformed and contribute to increasing the compression density without degrading battery performance.

Preferably, the negative active material has a specific surface area of 5 $m^2$/g or less. The specific surface area of the negative active material is measured by using a 'TriStar 3000' model', a nitrogen absorption BET specific surface area measurement instrument, made by Micromeritics instruments corp. Pores of the core carbon material of the negative active material, according to an exemplary embodiment of the present invention, are stopped by the attaching of carbon stemming from the coal-based or petrcileum-based heavy oil or coating thereto, so the negative active material has a low specific surface area of 5 $m^2$/g or smaller. Thus, because the specific surface area is small, the site in which electrolyte decomposition occurs is reduced, and thus, a degradation of performance of the secondary battery due to the electrode decomposition can be prevented.

A method for manufacturing the negative active material for a secondary battery according to an exemplary embodiment of the present invention will now be described.

First, a core carbon material having a particle shape and a carbon material stemming from coal-based or petroleum-based heavy oil are mixed in a wet or dry manner to form a carbon material coated layer on the surface of the core carbon material.

Here, 0.5 wt% to 25 wt% of the carbon material stemming from coal-based or petroleum-based heavy oil compared with the weight of the core carbon material is mixed in the core carbon material.

Preferably, as the core carbon material, high crystalline spherical natural graphite is used.

Alternatively, the core carbon material may be one selected from the group consisting of natural graphite, artificial graphite, mesocarbon micro-beads, mesophese pitch fine particles, isotropic pitch fine particles, or resin coal, each having an oval shape, a fragntent-like shape, a scale-like shape, or a whisker shape, and amorphous (or a low crystalline) carbon fine particles having a pseudo-graphite structure or a turbostratic structure, or a mixture thereof.

Preferably, pitch, tar, or a mixture thereof, having a softening point of 100°C or higher is used as the carbon material stemming from coal-based or petroleum-based heavy oil.

Next, the core carbon material with the carbon material coated layer formed thereon is fired (or baked) to form a carbide layer on a portion or the entirety of an edge of the core carbon material.

Here, the firing temperature for forming the carbide layer is set to range from 1000°C to 2500°C. Preferably, the firing process is performed twice, each time at a different firing temperature, and in this case, the firing temperature at a subsequent firing process is adjusted to be higher than that of a preceding firing process. For example, the firing processes are performed twice: the first firing process may be performed at 1100°C for one hour and the second firing process may be performed at 2300°C for one hour.

When the firing is completed, the negative active material is classified by using a classifier employing an air cyclone scheme. In classifying the negative active material, a blower pressure is adjusted to obtain negative active material powder having a PSD broad width of ranging 0.1 to 0.85 and a pore volume rate of 0.2 or greater when the classifying is completed. For reference, if the blower pressure is small, very small particles may blow off, while if the blower pressure increases, larger particles may blow off. Thus, particles ranging from light to heavy can differentially blow off by suitably regulating the blower pressure, thus classifying the negative active material particles in a desired particle distribution.

The negative active material for a secondary battery manufactured according to the foregoing method may be mixed with a conductive material, a binder, and an organic solvent so as to become an active material paste. The active material paste may then be coated on a metal current collector such as copper foil and dried, thermally treated, and pressed to manufacture an electrode (negative electrode) for a secondary battery.

Also, the electrode for a secondary battery manufactured thusly may be used to manufacture a lithium secondary battery. Namely, a lithium secondary battery which can be repeatedly charged and discharged may be manufactured by positioning a metal current collector with the negative active material according to an exemplary embodiment of the present invention bonded thereto with a certain thickness and a metal current collector with an Li-based transition metal compound bonded thereto with a certain thickness in a facing manner with a separator interposed therebetween, and impregnating an electrolyte for a lithium secondary battery into the separator. The electrode for a secondary battery and the method for manufacturing a secondary battery are widely known to a person skilled in the art to which the present invention pertains, so a detailed description thereof will be omitted.

Meanwhile, the negative active material for a secondary battery according to an exemplary embodiment of the present invention has distinctive physical properties. Thus, various methods known in the art to which the present invention pertains may be applied in manufacturing the electrode for a secondary battery and a secondary battery having the same by using the negative active material according to an exemplary embodiment of the present invention. Also, it is obvious that the type of secondary battery, for which the negative active material according to an exemplary embodiment of the present invention can be utilized, is not limited only to the lithium secondary battery.

[Mode for Invention]

<Embodiments and Comparative Examples>

[Embodiment 1]

15 wt% of pitch, a low crystalline carbon material, was mixed with high crystalline spherical natural graphite (namely, the percentage of the pitch is 15 weight percent compared to the weight of the natural graphite) and blended in a dry manner at a high speed for ten minutes to obtain a mixture. The mixture was introduced into a firing chamber, the temperature was increased to 1,000° C, and the mixture was fired again for one hour, then the temperature was increased to 2,300° C, and the mixture was fired again for one hour. Thereafter, fine particles were removed at a primary blower pressure of -50 mmHg by using a classifier employing an air cyclone scheme which is able to perform classification of 80 kg per hour, and negative active material powder was classified at a secondary blower pressure of -4000 mmHg. A PSD road value and a pore volume rate of the negative active material powder classified in the foregoing method were 0.20 and 0.7, respectively.

[Embodiment 2]

A negative active material was produced under the same conditions as those of Embodiment 1, except that the primary and secondary blower pressures were regulated to be -100 mmHg and -400 mmHg, respectively, in classifying the negative active material powder. Measurement results obtained through the foregoing method showed that a PSD broad value and a pore volume rate were 0.3 and 0.6, respectively.

[Embodiment 3]

A negative active material was produced under the same conditions as those of Embodiment 1, except that the primary and secondary blower pressures were regulated to be -150 mmHg and -400 mmHg, respectively, in classifying the negative active material powder. Measurement results obtained through the foregoing method showed that a PSD broad value and a pore volume rate were 0.3 and 0.5, respectively.

[Comparative Example 1]

A negative active material was produced under the same conditions as those of Embodiment 1, except that the primary and secondary blower pressures were regulated to be -400 mmHg and -800 mmHg, respectively, in classifying negative active material powder. Measurement results obtained through the foregoing method showed that a PSD broad value and a pore volume rate were 0.9 and 0.18, respectively.

[Comparative Example 2]

A negative active material was produced under the same conditions as those of Embodiment 1, except that the primary and secondary blower pressures were regulated to be -500 mmHg and -800 mmHg, respectively, in classifying negative active material powder. Measurement results obtained through the foregoing method showed that a PSD broad value and a pore volume rate were 0.95 and 0.15, respectively.

<Manufacturing of negative electrode for secondary battery and coin cell>

An electrode for a secondary battery was manufactured by using the respective negative active materials for a secondary battery produced according to the Embodiments 1 to 3 and the Comparative Examples 1 and 2 as raw materials. First, 100g of negative active material was put into a 500 ml reactor and a small amount of N-methylpyrrolidone (NMP) and polyvinylidene fluoride (PVDF) as a binder were input into the reactor, and mixed. Thereafter, the mixture was mixed by using a mixer, coated on a copper thin film, a negative electrode current collector, having a thickness of 8 $\mu$m, dried at 120 °C, and then pressed with a density of 1.65 g/cm$^3$ to manufacture a negative electrode for a secondary battery. Then, in order to evaluate charge and discharge characteristics of the negative active materials, a coil cell of a 2016 standard using Li as a counter electrode was produced for each of the Embodiments and Comparative examples.

<Evaluation of charge and discharge characteristics of coin cell>

Charge and discharge testing was performed from 1 cycle to 35 cycles. In performing the charge and discharge testing in each cycle, the potential was regulated to range from 0.01 V to 1.5 V. A charge current of 0.5 mA/cm$^2$ was charged until it reached 0.01V, and also, charging was maintained at 0.01V until the charge current reached 0.02 mA/cm$^2$. In discharge testing, current was discharged at 0.5 mA/cm$^2$ until it reached 1.5V.

<Measurement of impregnation of negative active material in electrolyte>

A negative electrode for a secondary battery was produced in the same manner as that in manufacturing the coin cell, cut square of 3 centimeters in width and length, and 1 $\mu$l of an electrolyte of EC/ECC+1M was then dropped thereonto, to measure a time required for the electrolyte to be absorbed into the electrode through the surface of the negative active material. Here, the electrolyte refers to a solution obtained by mixing 1 mol of LiPF$_6$ solution with a mixture solution of an ethylene carbonate (EC) solution and a diethylene carbonate (DEC) solution.

Table 1 shown below illustrates charge and discharge characteristics and the measurement results of electrolyte impregnation of the respective negative active materials produced according to Embodiments 1 to 3 and Comparative Examples 1 and 2. A discharge capacity retention of the 25$^{th}$ cycle was based on a discharge capacity of the first cycle.

[Table 1]

| | PSD broad value | Pore volume rate before and after compression | 1$^{st}$ cycle discharge capacity (mAh/g) | 1$^{st}$ cycle efficiency (%) | Capacity retention (@25$^{th}$ cycle) discharge capacity (%) | Electrolyte impregnation |
|---|---|---|---|---|---|---|
| Embodiment 1 | 0.2 | 0.7 | 354 | 93.6 | 96.3 | 15 minutes |
| Embodiment 2 | 0.3 | 0.6 | 348 | 93.8 | 91.5 | 25 minutes |
| Embodiment 3 | 0.4 | 0.5 | 347 | 93.4 | 93.1 | 20 minutes |
| Comparative Example 1 | 0.9 | 0.15 | 344 | 91.0 | 79.3 | 83 minutes |
| Comparative Example 2 | 0.95 | 0.1 | 339 | 91.1 | 72.2 | 90 minutes |

With reference to Table 1, the relationships among the pore volume rate before and after compression, the PSD broad value, and the battery performance can be checked. Namely, as the pore volume rate decreases and as the PSD broad value increases, the charge and discharge efficiency and cycle performance are degraded.

The reduction in the pore volume rate means that pores of the active material were reduced in an amount equal to the reduction in the pore volume rate in the pressing process. The reduction in the pore volume rate lowers the impregnation of the electrolyte as a transfer medium of lithium ions, degrading the battery performance as much. Also, the increase in the PSD broad value means that the size of the active material particles is uniform. When the size of the active material particles is uniform, the carbide layer coated on the surface of the active material surface is broken in pressing the negative active material, causing the edge of the core carbon material causing electrolyte decomposition to be exposed, increasing the likelihood of degradation of the battery performance as much.

Embodiments 1 to 3 satisfy the conditions that the pore volume rate is 0.2 or greater and the PSD broad values range from 0.1 to 0.85. Thus, it is noted that the charge and discharge efficiency and charge capacity retention of the Embodiments 1 to 3 are superior to those of Comparative Examples 1 and 2. The reason for this is because when the pore volume rate and the PSD broad value are suitably regulated such as in the exemplary embodiment of the present invention, an appropriate level of pores, major passages of the electrolyte impregnation, can be secured to make the lithium ions transfer smoothly, and when the negative active material is pressed, the pressing is made while smaller particles are filled between particles, thus not damaging the carbide layer coated on the surface of the negative active material even at the desired compression density.

In detail, when the PSD broad value satisfies the foregoing numerical value range, an initial charge and discharge efficiency is 93% or more, 90% or more of capacity retention is obtained at the 25th charge and discharge cycle, and the electrolyte impregnation time is one hour or less. Meanwhile, when the PSD broad value is not within the foregoing numerical value range, the initial charge and discharge efficiency is 92% or less, 80% or less of capacity retention is obtained at the 25th charge and discharge cycle, and the electrolyte impregnation time was one hour or more.

In addition, when the pore volume rate satisfies the foregoing numerical value range, an initial charge and discharge efficiency is 93% or more, 90% or more of capacity retention is obtained at the 25th charge and discharge cycle, and the electrolyte impregnation time is one hour or less. Meanwhile, when the pore volume rate does not satisfy the foregoing numerical value range, the initial charge and discharge efficiency is 92% or less, 80% or less of capacity retention is obtained at the 25th charge and discharge cycle, and the electrolyte impregnation time was one hour or more.

The foregoing experimental results support the idea that the physical property conditions of the negative active material proposed by the present invention can be physical property conditions that are able to optimize the performance or the secondary battery.

As set forth above, according to exemplary embodiments of the invention, the discharge capacity, efficiency, and the capacity retention at the long-term cycle of the secondary battery can be improved by optimizing the PSD broad value related to the particle distribution among the physical properties of the carbon material-based negative active material for a secondary battery and the pore volume rate of the negative active material before and after compression.

While the present invention has been shown and described in connection with the exemplary embodiments, it will be apparent to those skilled in the art that modifications and variations can be made without departing from the spirit and scope of the invention as defined by the appended claims.

**Claims**

1. A negative active material for a secondary battery including a core carbon material whose edge is partially or entirely coated with a carbide layer, wherein a particle size distribution (PSD) broad value ranges from 0.1 to 0.85 and, when the negative active material is pressed at a pressure of 2 tons, a pore volume rate before and after the compression is 0.2 or greater.

2. The negative active material of claim 1, wherein the core carbon material is high crystalline spherical natural graphite.

3. The negative active material of claim 1, wherein the carbon material is one selected from the group consisting of natural graphite, artificial graphite, mesocarbon micro-beads, mesophese pitch fine particles, isotropic pitch fine particles, or resin coal, each having an oval shape, a fragment-like shape, a scale-like shape, or a whisker shape, and low crystalline carbon fine particles having a pseudo-graphite structure or a turbostratic structure, or a mixture thereof.

4. The negative active material of claim 1, wherein the carbide layer is a low crystalline carbide layer formed by coating pitch, tar stemming from coal-based or petroleum-based heavy oil, or a mixture thereof on the core carbon material, and carbonizing and firing the resultant structure.

5. An electrode for a secondary battery comprising a metal current collector coated with the negative active material of any one of claim 1 to claim 4.

6. A secondary battery comprising a negative electrode current collector coated with the negative active material according to any one of claim 1 to claim 4, a positive electrode current collector coated with a positive active material, a separator interposed between the negative electrode current collector and the positive electrode current collector, and an electrolyte impregnated in the separator.

7. A method for manufacturing a negative active material based on a carbon material for a secondary battery, the method comprising:

   (a) mixing a core carbon material whose PSD broad value ranges from 0.1 to 0.85 and pore volume before aud after compression, when the negative active material is pressed at a pressure of 2 tons, is 0.2 or greater, and a carbon coating material stemming from coal-based or petroleum-based heavy oil to obtain a mixture; and
(b) firing the mixture to carbonize the carbon coating material to form a carbide layer on a portion or the entirety of an edge of the core carbon material.

8.  The method of claim 7, wherein the core carbon material is high crystalline spherical natural graphite.

9.  The method of claim 7, wherein the carbon material is one selected from the group consisting of natural graphite, artificial graphite, mesocarbon micro-beads, mesophese pitch fine particles, isotropic pitch fine particles, or resin coal, each having an oval shape, a fragment-like shape, a scale-like shape, or a whisker shape, and a low crystalline carbon fine particles having a pseudo-graphite structure or a turbostratic structure, or a mixture thereof.

10.  The method of claim 7, wherein carbon coating material is pitch, tar stemming from coal-based or petroleum-based heavy oil, or a mixture thereof.

【DRAWINGS】
【Figure 1】

in volume/undersize

## INTERNATIONAL SEARCH REPORT

International application No.

**PCT/KR2009/000792**

A. CLASSIFICATION OF SUBJECT MATTER

***H01M 4/36(2006.01)i***

According to International Patent Classification (IPC) or to both national classification and IPC

B. FIELDS SEARCHED

Minimum documentation searched (classification system followed by classification symbols)
IPC H01M 4/02, H01M 10/40, H01M 4/58, H01M 4/36

Documentation searched other than minimum documentation to the extent that such documents are included in the fields searched

Electronic data base consulted during the international search (name of data base and, where practicable, search terms used)

e-KIPASS (KIPO internal) & Keywords: lithium battery, active material, anode, carbon, surface area, spherical, and coating

C. DOCUMENTS CONSIDERED TO BE RELEVANT

| Category* | Citation of document, with indication, where appropriate, of the relevant passages | Relevant to claim No. |
|---|---|---|
| Y | KR 10-2004-0057416 A (SAMSUNG SDI CO., LTD.) 02 July 2004<br>See abstract; embodiments 1-5; claims 1, 3, 4, 6, 7, 9. | 1-10 |
| Y | KR 10-0663180 B1 (SODIFF CO., LTD.) 05 January 2007<br>See abstract; table 1; embodiments 1-10; claims 1-3. | 1-10 |
| A | KR 10-2007-0098924 A (MATSUSHITA ELECTRIC INDUSTRIAL CO., LTD.) 05 October 2007<br>See abstract; claims 1, 5; tables 1-3. | 1-10 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 31 MARCH 2009 (31.03.2009) | **31 MARCH 2009 (31.03.2009)** |

| Name and mailing address of the ISA/ | Authorized officer |
|---|---|
| Korean Intellectual Property Office<br>Government Complex-Daejeon, 139 Seonsa-ro, Daejeon 302-701, Republic of Korea<br>Facsimile No. 82-42-472-7140 | Telephone No. |

Form PCT/ISA/210 (second sheet) (July 2008)

INTERNATIONAL SEARCH REPORT
Information on patent family members

International application No.

**PCT/KR2009/000792**

| Patent document cited in search report | Publication date | Patent family member(s) | Publication date |
|---|---|---|---|
| KR 10-2004-0057416 A | 02.07.2004 | CN 1516305 A | 28.07.2004 |
| | | JP 2004-214192 A | 29.07.2004 |
| | | US 7485395 B2 | 03.02.2009 |
| | | US 2004-0137328 A1 | 15.07.2004 |
| KR 10-0663180 B1 | 05.01.2007 | None | |
| KR 10-2007-0098924 A | 05.10.2007 | EP 1833109 A1 | 12.09.2007 |
| | | US 2008-0113271 A1 | 15.05.2008 |
| | | WO 2006-129415 A1 | 07.12.2006 |

Form PCT/ISA/210 (patent family annex) (July 2008)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348109 A